Europäisches Patentamt

European Patent Office

Office européen des brevets

(19)

(11) Veröffentlichungsnummer: **0 003 354**
**B1**

(12) **EUROPÄISCHE PATENTSCHRIFT**

(21) Anmeldenummer: **79100212.4**

(22) Anmeldetag: **25.01.79**

(51) Int. Cl.³: **B 60 N 1/12, B 60 R 21/10**

(54) **Rücksitzbank für Kraftfahrzeuge.**

(30) Priorität: **27.01.78 DE 2803574**

(43) Veröffentlichungstag der Anmeldung:
**08.08.79 Patentblatt 79/16**

(45) Bekanntmachung des Hinweises auf die Patenterteilung:
**25.02.81 Patentblatt 81/8**

(84) Benannte Vertragsstaaten:
**FR GB IT SE**

(56) Entgegenhaltungen:
**DE - A - 2 518 715**
**DE - A - 2 720 954**
**DE - U - 7 612 141**
**US - A - 2 436 294**
**US - A - 3 640 572**

(73) Patentinhaber: **AUDI NSU AUTO UNION**
**Aktiengesellschaft**
**Postfach 220 Ettingerstrasse**
**D-8070 Ingolstadt (DE)**

(72) Erfinder: **Ruda, Günter**
**Vorwerkstrasse 8**
**D-8071 Wettstetten (DE)**

Rücksitzbank für Kraftfahrzeuge

Die Erfindung bezieht sich auf eine Rücksitzbank für Kraftfahrzeuge, insbesondere für Personenkraftwagen, mit einer aus den Rücksitzbank heraus bewegbaren Rückhaltevorrichtung zur Sicherung eines Kindes. Die meisten Kindersitze werden nachträglich mittels Gurten oder ähnlichem an der Rücksitzbank befestigt. Bei diesen Kindersitzen ist es schwierig, sie so zu befestigen, daß sie den Sicherheitsanforderungen gerecht werden. Daneben ist es aber auch umständlich, den Kindersitz ein- und auszubauen, bzw. bei Nichtgebrauch zu verstauen, wenn der Sitzplatz für einen Erwachsenen genutzt werden soll.

Es wurde deshalb schon vorgeschlagen, einen Teil des Rückenpolsters, ähnlich einer Mittelarmstütze, ausklappbar zu gestalten, wodurch sich für das Kind eine Sitzfläche ergibt, die gleichzeitig eine so große Vertiefung im Rückenpolster hinterläßt, daß das Kind in der eigentlichen Vertiefung sitzt und seitlichen Halt findet. Zur Sicherheit des Kindes sind am Rückenpolster Sicherheitsgurte befestigt (DE—GM 76 12 141, B60N 1—12).

Diese Anordnung weist den Nachteil auf, daß die Rückhaltevorrichtung nicht selbsttätig funktioniert, das heißt, Sicherheitseinrichtungen (Gurte) aktiv betätigt werden müssen. Außerdem its die Vorrichtung wegen der hohen Sitzposition nur für kleinere Kinder geeignet.

Demgegenüber liegt der Erfindung die Aufgabe zugrunde, eine Rücksitzbank für Kraftfahrzeuge so auszubilden, daß in einfacher Weise eine sichere Unterbringung eines Kindes möglich ist und die Rücksitzbank mit wenigen Handgriffen wieder in einen Sitzplatz für Erwachsene verwandelbar ist.

Diese Aufgabe wird erfindungsgemäß dadurch gelöst, daß die Rückhaltevorrichtung durch einen ein auf der Rücksitzbank aufgenommenes Kind teilweise umschließenden Bügel gebildet ist, welcher in seinem in die Rücksitzbank hineinbewegten Zustand einen Teil der Oberfläche der Rücksitzbank bildet. Durch das Ausfahren der integrierten Rückhältevorrichtung aus der Rücksitzbank wird erreicht, daß die Einrichtung jederzeit für ein Kind zu Verfügung steht, bei Nichtgebrauch jedoch durch einfaches Zurückfahren der Rückhaltevorrichtung wieder ein vollwertiger Sitzplatz für Erwachsene geschaffen wird.

Vorteilhaft wird die Rückhaltevorrichtung so ausgebildet, daß der Bügel U-förmig ist. Diese Form bietet dem Kind auch Schutz bei einem Seitenaufprall, leitet die auftretenden Kräfte in günstiger Weise auf die Befestigungsstellen über und ist einfach und damit kostengünstig herstellbar. Der U-förmige Bugel der Rückhaltevorrichtung kann in seiner Gebrauchslage leicht schräg nach oben verlaufen und in dieser Richtung mehrfach arretierbar sein, so daß sich die Rückhaltevorrichtung für Kinder unterschiedlicher Größe verwenden läßt.

Um eine Bewegung der als U-förmigen Bügel ausgeführten Rückhaltevorrichtung in die Gebrauchs- bzw. Nichtgebrauchsstellung zu ermöglichen, können die freien Enden der Schenkel des U-förmigen Bügels vorteilhaft mit der Rückenlehne der Rücksitzbank über ein Gelenk verbunden sein.

Werden in weiterer Ausgestaltung der Erfindung die freien Enden der Schenkel des U-förmigen Bügels in Kulissen, die die Form einer "7" aufweisen, geführt, dann wird bei nach oben geschwenkten Bügel durch den schräg nach unten weisenden kurzen Schenkel der Kulisse eine Selbstsicherung der Vorrichtung gegen ein Nach-Vorne-Kippen erreicht.

Besonders vorteilhaft ist, wenn der U-förmige Bügel in seiner in die Rückenlehne zurückbewegten Stellung eine die Rückenlehne überragende Kopfstütze bildet. In dieser Ausführung wird nicht nur ein vollwertiger Sitzplatz für einen Erwachsenen geschaffen, sondern auch gleichzeitig dessen sichere Unterbringung bei einem Heckaufprall gewährleistet.

Je nach den persönlichen Erfordernissen ist es möglich, in der Rücksitzbank einen, zwei oder gar drei Kindersitze auszubilden, wobei sich diese Sitze bei Nichtgebrauch schnell in einen vollwertigen Sitzplatz für eine erwachsene Person verwandeln lassen. Darüberhinaus ist es auch möglich, die heruntergeschwenkte Rückhaltevorrichtung als Armstütze zu gebrauchen. Dafür eignet sich am besten die in der Mitte der Rücksitzbank angeordnete Vorrichtung. Jede der vorgesehenen Vorrichtungen läßt sich aber auch dazu verwenden, um irgendwelche Gegenstände so auf der Rücksitzbank unterzubringen, daß sie beim Bremsen nicht nach vorne rutschen können.

Mehrere Ausführungsbeispiele der Erfindung sind in den Zeichnungen dargestellt und werden nachfolgend näher beschrieben.

Es zeigt:

Fig. 1 in perspektivischer Ansicht einen Ausschnitt aus einer Rücksitzbank mit einer U-förmigen Rückhaltevorrichtung, die in die Rückenlehne einschiebbar ist.

Fig. 1a einen Längsschnitt durch die Rückhaltevorrichtung aus Fig. 1,

Fig. 2 eine Rückhaltevorrichtung, die eine Kopfstütze bildet in Nichtgebrauchsstellung.

Fig 3 die Rückhaltevorrichtung aus Fig. 2 in Gebrauchsstellung als Kindersitz,

Fig. 4 ein weiteres Ausführungsbeispiel, wobei die Mittelarmlehne als Sitzfläche des Kindersitzes dient,

Fig. 5 eine Seitenansicht der Rücksitzbank aus Fig. 4, wobei das Schwenken der Rückhaltevorrichtung angedeutet ist,

Fig. 6 ein Beispiel, wobei ein Teil des Sitzpolsters der Rücksitzbank als Rückhaltevorrichtung für ein Kind dient,

Fig. 7 die Rückhaltevorrichtung aus Fig. 6, in ausgeschwenkter Stellung.

Eine in der ersten Figur dargestellte Rücksitzbank 1 gliedert sich in ein Sitzpolster 3 und eine Rücklehne 5. In der Rückenlehne 5 verschiebbar gelagert ist eine Rückhaltevorrichtung, die in der gezeichneten Stellung einen Bügel 7 bildet. Die aus zwei Schenkeln 9 und einem Steg 11 bestehende U-förmige Rückhaltevorrichtung gewährleistet für das untergebrachte Kind einen zuverlässigen Schutz bei einem Aufprall unabhängig von der jeweiligen Stoßrichtung. Der Steg 11 ist mit einer Griffmulde 13 versehen, mittels der die Rückhaltevorrichtung leicht eingeschoben bzw. in die Gebrauchslage gebracht werden kann. Die Oberfläche und die Abmessungen des Steges 11 sind so gewählt, daß bei eingeschobener Rückhaltevorrichtung diese der mit Querrippen versehenen Polsterung entspricht und dadurch nicht ins Auge fällt. Außerdem kann bei Benutzung der Rückhaltevorrichtung in die durch das Herausziehen der Vorrichtung entstehende Öffnung 14 ein Polsterteil eingefügt werden, der für den Rücken des Kindes eine ebene Anlagefläche schafft.

Um die Rückhaltevorrichtung für Kinder unterschiedlicher Größe und Alters verwenden zu können, ist sie nicht nur parallel, sondern auch unter einem Winkel zum Sitzpolster 3 bewegbar und in verschiedenen Stellungen arretierbar. Soll ein Kleinkind untergebracht werden, so wird man die Rückhaltevorrichtung entsprechend weit einschieben und die unterste Winkelstellung wählen, wodurch sich die Vorrichtung nicht nur auf den Umfang des Kindes, sondern durch die niedrigere Lage des Steges 11 auch auf die geänderte Körperproportion einstellen läßt.

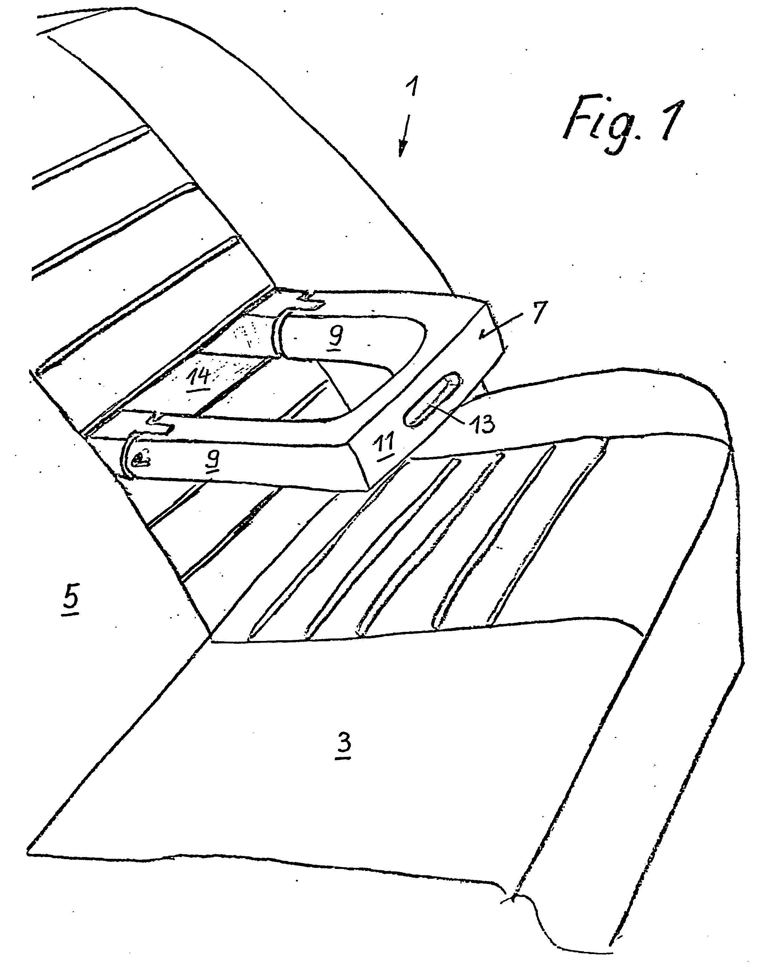

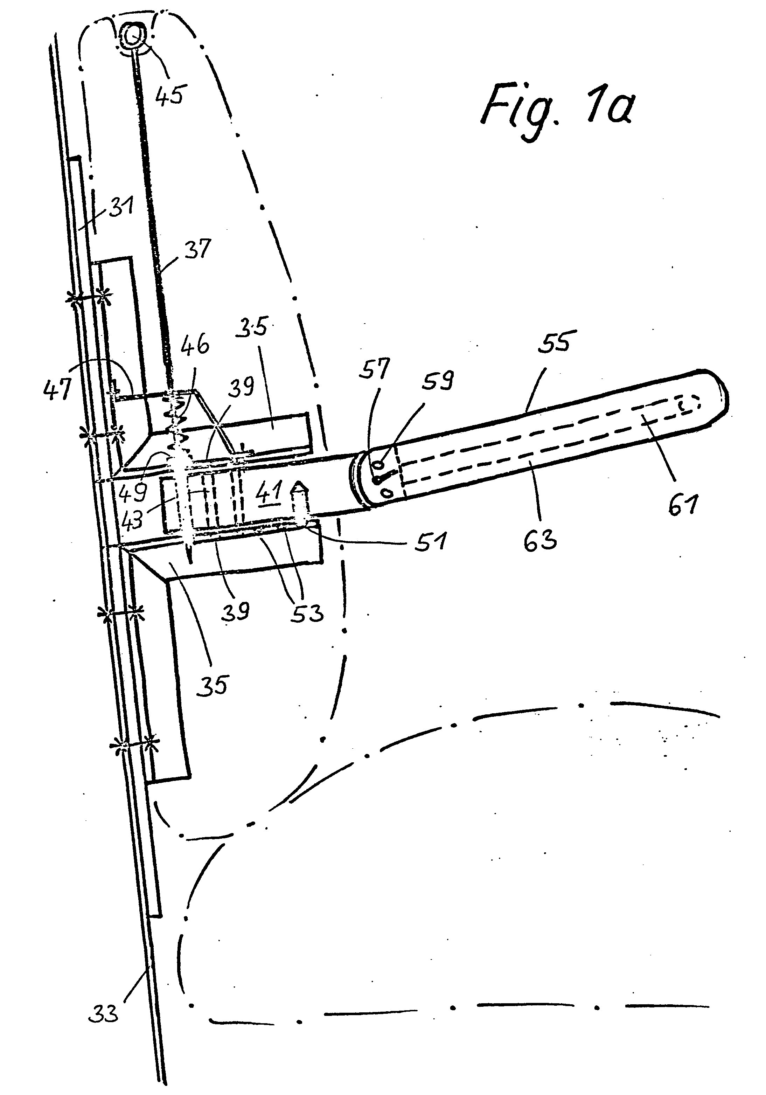

Die in Fig. 1a dargestellte Verstell- und Arretiereinrichtung der Rückhaltevorrichtung ist lösbar und unter Zwischenschaltung eines Verstärkungsbleches 31 an der den Fahrgastraum begrenzenden Trennwand 33 befestigt. Die Führung der Rückhaltevorrichtung übernehmen zwei Winkelprofile 35, die zur Aufnahme eines Verriegelungsteiles 37 mit mehreren Bohrungen 39 versehen sind. Diesen Bohrungen entsprechend weist auch das Führungsteil 41 der Rückhaltevorrichtung Durchbrüche 43 auf, so daß zusammen mit dem Verriegelungsteil 37 mehrere Positionierungen der Rückhaltevorrichtung in Längsrichtung möglich sind. Das stabförmige Verriegelungsteil 37 verläuft durch die Rückenlehne 5 und durchdringt diese in ihrem oberen Bereich. Um die Rückhaltevorrichtung einschieben oder eine andere Position wählen zu können, muß die Verriegelung durch Anheben des Verriegelungsteiles 37, das zu diesem Zweck mit einem Griff 45 versehen ist, gelöst werden. Befindet sich die Rückhaltevorrichtung in der eingeschobenen Stellung bzw. stimmen die Bohrungen der Winkelprofile mit den Durchbrüchen 43 des Führungsteiles 41 überein, dann verriegelt die Arretiervorrichtung selbsttätig unter Wirkung einer Feder 46, die sich an einem Bügel 47 abstützt. Durch den Bügel 47 und einem Anschlag 49 am Verriegelungsteil 37 wird zudem verhindert, daß das Führungsteil 37 mehr als erforderlich aus der Einrichtung herausziehbar ist. Zur Kenntlichmachung der einzelnen Positionen der Längsverstellung ist im Führungsteil 41 eine unter Federeinwirkung stehende Kugel 51 gelagert, die in Eindrückungen 53 des Winkelprofiles 35, deren Abstand dem der Bohrung entspricht, einrastet.

Der U-förmige Aufbau der Rückhaltevorrichtung bedingt zwei Führungsteile 41. Ob nun beide Führungsteile mit einer Arretiervorrichtung versehen werden, ist im wesentlichen abhängig von der Dimensionierung der verwendeten Einzelteile. Sollen zwei Verriegelungsteile 37 Anwendung finden, so faßt man diese vorteilhaft innerhalb der Rückenlehne 5 zusammen und führt nur eine Betätigungsstange zur Lehnenoberkante.

Wie bereits oben erwähnt, setzt sich die Rückhaltevorrichtung aus zwei Führungsteilen 41 zusammen, die durch den eigentlichen Haltebügel 55 für das Kind verbunden sind. Wie aus Fig. 1a ersichtlich ist, sind Führungsteile und Haltebügel gelenkig miteinander verbunden und durch einen Bolzen 57, der in verschiedene, halbkreisförmig angeordnete Löcher 59 im Führungsteil 41 eingeschoben werden kann, in mehreren Winkelstellungen feststellbar. Der Haltebügel 55 besteht im Inneren aus einem Rohr 61, das von Polstermaterial 63 umgeben ist.

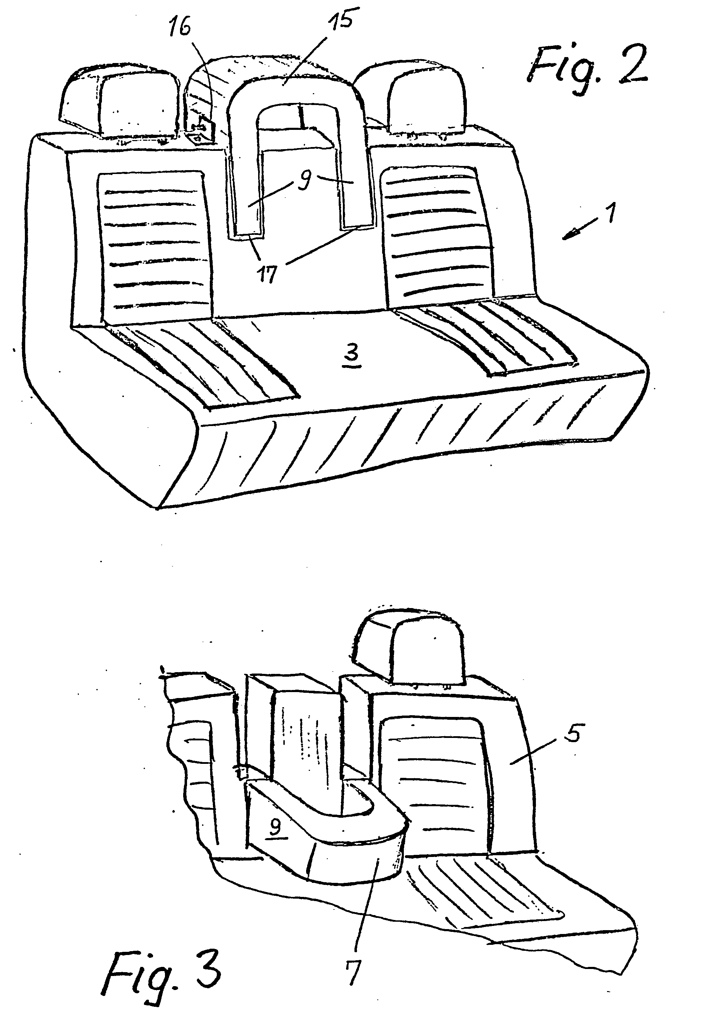

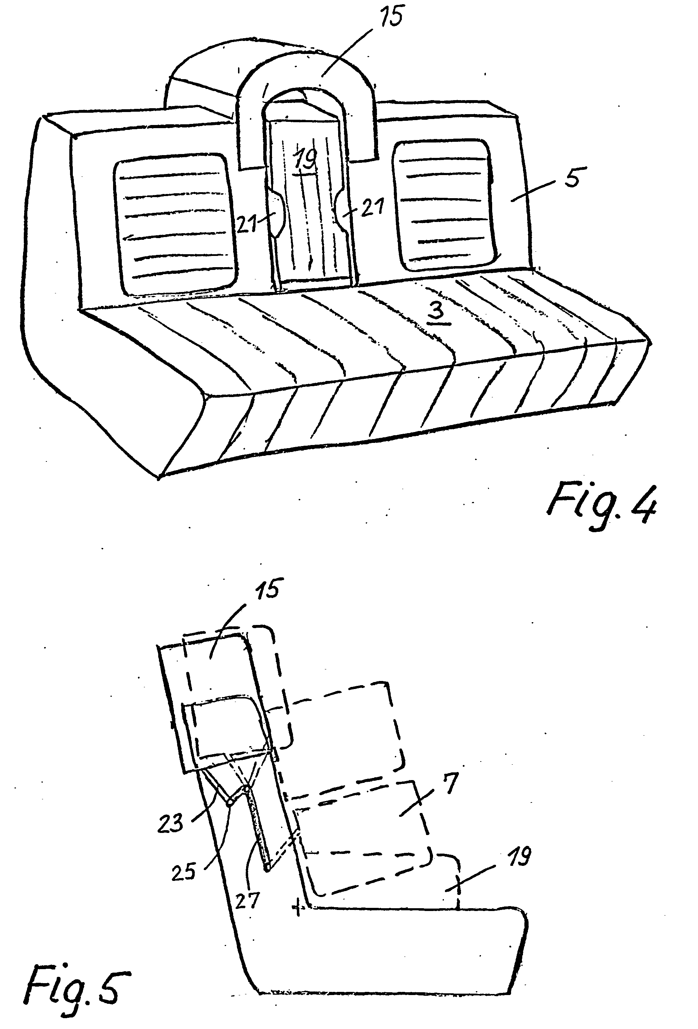

Die Figuren 2 und 3 zeigen eine Rückhaltevorrichtung, die nicht einschiebbar ist, sondern bei Nichtgebrauch hochgeschwenkt wird. In dieser Stellung bildet sie eine Kopfstütze 15, wenn der Platz durch eine erwachsene Person genützt werden soll. Die Sicherung dieser Lage erfolgt durch einen Halter 16. Da die gezeigte Kopfstütze 15 durch ein einfaches Schwenken um die vorderen Kanten 17 der Schenkel 9 viel zu hoch angeordnet wäre, sind Maßnahmen erforderlich, um die Rückhaltevorrichtung abzusenken. Diese sind in dem nachfolgenden Beispiel gezeigt und näher beschrieben.

Gemäß Fig. 4 und 5 wird neben der als Kopfstütze 15 dienenden Rückhaltevorrichtung auch eine Armlehne 19 mit in den Kindersitz eingezogen. Die Armlehne 19 ist zu diesem Zweck mit Ausbuchtungen 21 versehen, die der Unterbringung der Beine des Kindes dienen. Durch die Verwendung der Armlehne 19 gelangt das Kind in eine höhere Sitzposition, die ihm einen freien Blick durch die Fenster gewährt. Diese Unterbringungsart ist für Kleinkinder gedacht, während größere Kinder direkt auf dem Sitzpolster 3 Platz nehmen und durch Herunterschwenken der Rückhaltevorrichtung gesichert werden können. Die hochgeklappte Armlehne 19 bildet dann die Rückenstütze.

In Fig. 5 ist angedeutet, wie die Kopfstütze 15 in eine als Rückhaltevorrichtung dienende Stellung geschwenkt werden kann. An einer Lasche 23 der Kopfstütze 15 ist dazu ein Bolzen 25 befestigt, der in einer Kulisse 27, die die Form einer "7" aufweist, gleitet. Die Kulisse 27 ist durch Streben verstärkt, die fest mit dem an die Rückenlehne 5 angrenzenden Karosseriekörper verbunden sind. Für den Umbau der Kopfstütze in einen Kindersitz wird dieselbe ein wenig angehoben, nach vorne gezogen und dann etwa um 90 Grad nach vorne geschwenkt. Von dieser Stellung aus rutscht sie selbsttätig und parallel zur Rückenlehne 5 bis zu einem unteren Anschlagpunkt. Dieser kann variabel ausgeführt sein, so daß eine Anpassung der Rückhaltevorrichtung an die Körpergröße des Kindes möglich ist. Zur optimalen an die Körpermaße des Kindes ist es auch denkbar, den Steg 11 der Rückhaltevorrichtung relativ zur Rückenlehne 5 verschiebbar oder auswechselbar auszuführen.

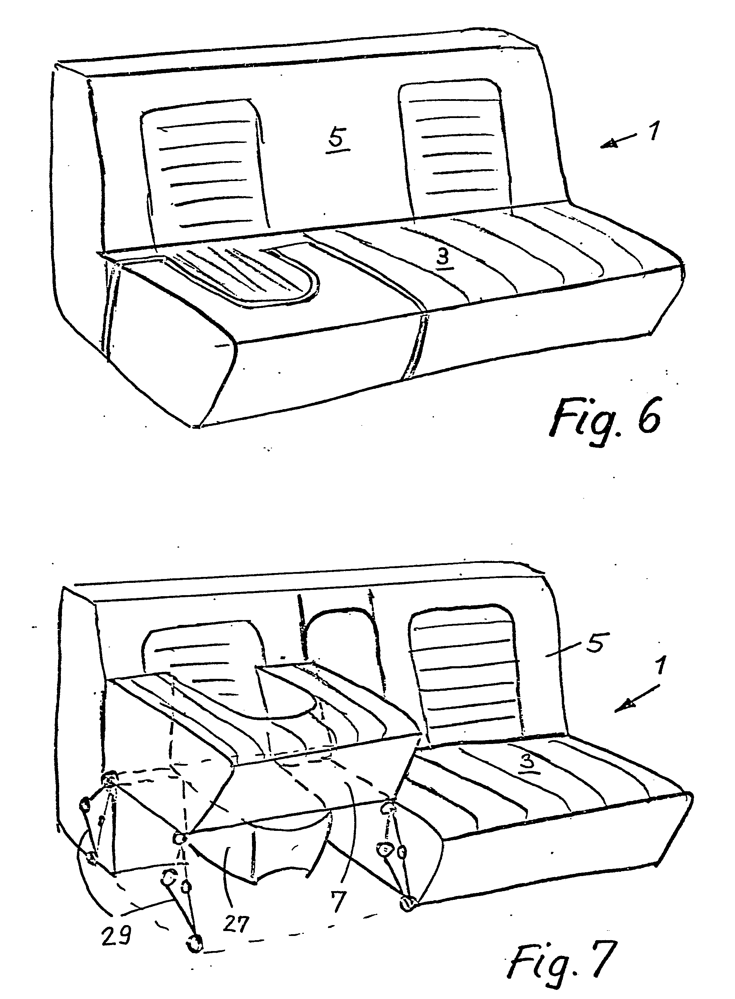

Ein letztes Beispiel zeigen die Figuren 6 und 7. Hier bildet nicht ein Teil der Rückenlehne 5, sondern ein aus dem Sitzpolster 3 herausschwenkbares Teil eine Rückhaltevorrichtung für ein auf der Rücksitzbank 1 sitzendes Kind. Die Rückhaltevorrichtung ist hier ebenfalls U-förmig gestaltet, so daß die Vorrichtung unabhängig von der Stoßrichtung wirksam werden kann. Dass Kind sitzt auf dem verbleibenden Polsterteil 27 des Sitzpolsters 3. Um die Rückhaltevorrichtung in der in Fig. 7 gezeigten Stellung zu halten, ist ein Gestänge 29 oder eine ähnliche Einrichtung mit der Möglichkeit zum Feststellen erforderlich. Das angedeutete Gestänge 29 weist einen scherenförmigen Aufbau auf und ist in verschiedenen Höhen feststellbar (nicht gezeigt).

Besonders bei der Rückhaltevorrichtung mit einem aus der Rückenlehne der Rücksitzbank herausschwenkbaren U-förmigen Bügel kann es vorteilhaft sein, wenn an diesem Gurte befestigt sind, welche sich selbsttätig beim Absenken des Bügels über das auf der Rücksitzbank untergebrachte Kind legen und so zusätzlichen Schutz bieten. In besonderem Maße eignen sich hierfür Automatikgurte, deren Aufwickelvorrichtung in der Rückenlehne untergebracht werden kann.

**Patentansprüche**

1. Rücksitzbank für Kraftfahrzeuge, insbesondere Personenkraftwagen, mit einer aus der Rücksitzbank herausbewegbaren Rückhaltevorrichtung zur Sicherung eines Kindes, dadurch gekennzeichnet, daß die Rückhaltevorrichtung durch einen ein auf der Rücksitzbank (1) aufgenommenes Kind teilweise umschließenden Bügel (7) gebildet ist, welcher in seinem in die Rücksitzbank hineinbewegten Zustand einen Teil der Oberfläche der Rücksitzbank bildet.

2. Rücksitzbank nach Anspruch 1, dadurch gekennzeichnet, daß der Bügel (7) U-förmig ist.

3. Rücksitzbank nach Anspruch 2, dadurch gekennzeichnet, daß die freien Enden der Schenkel (9) des U-förmigen Bügels (7) mit der Rückenlehne (5) der Rücksitzbank (1) gelenkig verbunden sind.

4. Rücksitzbank nach Anspruch 3, dadurch gekennzeichnet, daß die freien Enden der Schenkel (9) des U-förmigen Bügels (7) in Kulissen (27), die die Form einer "7" aufweisen, geführt sind.

5. Rücksitzbank nach wenigstens einem der Ansprüche 2 bis 4, dadurch gekennzeichnet, daß der U-förmige Bügel (7) in seiner in die Rückenlehne (5) zurückbewegten Stellung eine die Rückenlehne überragende Kopfstütze (15) bildet.

**Claims**

1. Rear seat for motor vehicles, in particular passenger cars, with a child restraint device which can be extended out of the rear seat, the restraint device comprising a bar (7) which partially encircles a child accommodated on the rear seat (1) and forms part of the surface of the rear seat when it is retracted into the rear seat.

2. Rear seat according to Claim 1 wherein the bar (7) is U-shaped.

3. Rear seat according to Claim 2 wherein the free ends of the arms (9) of the U-shaped bar (7) are pivot-mounted on the seatback (5) of the rear bench seat (1).

4. Rear seat according to Claim 3 wherein the free ends of the arms (9) of the U-shaped bar (7) run in guides (27) shaped like a figure "7".

5. Rear seat according to any one of Claims 2 to 4 wherein the U-shaped bar (7), when retracted into the seatback (5), forms a head restraint (15) which protrudes above the seatback.

**Revendications**

1. Banquette arrière pour véhicules automobiles, et notamment pour voitures de tourisme, avec un dispositif de retenue que l'on peut faire sortir de la banquette arrière pour assujettir un enfant, caractérisée en ce que le dispositif de retenue est constitué par un arceau (7) qui entoure en partie un enfant installé sur la banquette arrière (1) et qui forme un partie de la surface de la banquette arrière lorsqu'il occupe sa position rentrée dans cette banquette.

2. Banquette arrière selon la revendication 1, caractérisée en ce que l'arceau (7) a la forme d'un U.

3. Banquette arrière selon la revendication 2, caractérisée en ce que les extrémités libres des branches (9) de l'arceau en U (7) se raccordent de façon articulée au dossier (5) de la banquette arrière (1).

4. Banquette arrière selon la revendication 3, caractérisée en ce que les extrémités libres des branches (9) de l'arceau en U (7) sont guidées

7       0 003 354       8

dans des coulisses (27) que présentent la forme d'un "7".

5. Banquette arrière selon l'une quelconque des revendications 2 à 4, caractérisée en ce que dans sa position rentrée dans le dossier (5), l'arceau en U (7) constitue un appuie-tête (15) qui fait saillie au-dessus du dossier.

**Fig. 1**

0 003 354

*Fig. 1a*

Fig. 2

Fig. 3

0 003 354

Fig. 4

Fig. 5

4

*Fig. 6*

*Fig. 7*